# EUROPÄISCHE PATENTSCHRIFT

(11) **EP 1 697 251 B1**
(45) Veröffentlichungstag und Bekanntmachung des Hinweises auf die Patenterteilung: **02.09.2009**
(21) Anmeldenummer: 04820570.2
(22) Anmeldetag: 13.12.2004
(51) Int. Cl.: B66F 9/14, B65G 1/04

(54) **TELESKOPIERBARE LASTTRAGVORRICHTUNG**
TELESCOPIC LOAD-CARRYING DEVICE
DISPOSITIF TELESCOPIQUE POUR PORTER DES CHARGES

(30) Priorität: 22.12.2003 AT 20682003
(43) Veröffentlichungstag der Anmeldung: 06.09.2006
(73) Patentinhaber: TGW Mechanics GmbH, 4600 Wels (AT)
(72) Erfinder: HANSL, Rudolf, 4020 Linz (AT); REISCHL, Josef, A-4623 Gunskirchen (AT)
(74) Vertreter: Ofner, Clemens
(86) Internationale Anmeldenummer: PCT/AT2004/000437
(87) Internationale Veröffentlichungsnummer: WO 2005/061363

(56) Entgegenhaltungen:
- DE-A1- 3 237 347
- DE-A1- 3 519 780
- US-A- 3 486 653
- US-A- 3 556 329
- US-A- 3 954 185
- US-A- 4 458 808
- US-A1- 2003 185 656
- PATENT ABSTRACTS OF JAPAN Bd. 1998, Nr. 06, 30. April 1998 (1998-04-30) & JP 10 035819 A (MURATA MACH LTD), 10. Februar 1998 (1998-02-10)

## Beschreibung

Die Erfindung betrifft ein Lastaufnahmemittel, wie im Oberbegriff des Anspruches 1 beschrieben. Eine Vorrichtung mit einem solchen last aufnahme mittel ist aus dem Dokument US 3 954 185 A bekannt.

Aus dem Dokument DE 42 05 856 A1 ist eine Vorrichtung zur Lastaufnahme mit einem teleskopierbaren Lastaufnahmemittel, bestehend aus einem Unterteil, einem als Schieber ausgebildeten Oberteil und dazwischen angeordneten Trägem bekannt. Die Träger und der Oberteil sind in Rollenführungen in zu einer Auflagefläche der Last parallelen Ebene relativ zueinander und in Relation zum Unterteil verstellbar. Dazu weisen die Träger längsverlaufende Führungsnuten auf in denen die am Unterteil und am Schieber drehbar gelagerte Führungsrollen laufen. Weiters besteht eine Reib- oder kraftschlüssige Antriebsverbindung durch auf Reibflächen oder Zahnstangen des Oberteils und Unterteils abwälzende Reibräder bzw. Zahnräder, welche an den Trägren lose drehbar gelagert sind. Eine derartige Antriebsverbindung ermöglicht mit einem einzelnen, zwischen dem Unterteil und dem Schieber wirkenden Antrieb ein Verstellen des Oberteils in Abhängigkeit der Verstellung der Träger.

Aus dem Dokument DD 74 496 ist ein Lastaufnahmemittel für Stapelgeräte, Regalbediengeräte oder dgl. bekannt, welches teleskopartig ausgebildet ist und zwischen einem Unterteil und einem Oberteil eine Teleskopschiene mit längsgerichteten Führungsnuten für die Aufnahme von Führungsrollen aufweist, die am Oberteil und am Unterteil drehbar gelagert sind und die relative Verstellbarkeit und Führung der Teile zueinander gewährleisten. Eine Antriebsanordnung besteht aus einem Zahnrad-Zahnstangentrieb zum Antrieb der Teleskopschiene relativ zum Unterteil. Eine Übertragungsvorrichtung für die Verstellung des Oberteils in Relation zur Verstellung der Teleskopschienen zum Unterteil wird durch in der Teleskopschiene drehbar gelagerte Zahnräder und im Unterteil und im Oberteil angeordnete Zahnstangen gebildet, die miteinander kämmend in Eingriff stehen.

Aus dem Dokument US 4,458,808 A ist weiters eine teleskopierbarer Tisch als Lastaufnahmemittel mit einem feststehenden Rahmen und einem dazu in Rollenanordnungen linear verstellbaren Zwischenrahmen und einen dazu in Rollenanordnungen verstellbaren Obertisch bekannt. Eine Antriebsanordnung ist zwischen dem feststehenden Rahmen und dem Zwischenrahmen durch einen Kettentrieb gebildet. Zur Antriebskoppelung des Obertisches sind durch Ketten gebildete strangförmige Übertragungsmittel in gegengleicher Anordnung zwischen Verankerungsmittel am Obertisch und feststehenden Rahmen und am Zwischenrahmen drehbar gelagerten Umlenkrädern vorgesehen. Die gegengleiche Anordnung ermöglicht ein beidseitiges Verfahren des Obertisches in Abhängigkeit der Relativbewegung zwischen dem feststehenden Rahmen und dem Zwischenrahmen.

Aus dem Dokument US 2003/0185656 A1 ist weiters eine Lastaufnahmevorrichtung mit synchron verstellbaren Teleskopschubarmen, die einen Mittel- und Oberschlitten aufweisen, bekannt. Diese sind jeweils in Seiten- und Höhenführungsbahnen eines durch ein Hohlprofil gebildeten Tragrahmens verstellbar geführt und zu dem Tragrahmen und zueinander relativ verstellbar. Die Seiten- und Höhenführungsbahnen werden durch lineare Gleitlageranordnungen gebildet. Zwischen dem feststehenden Tragrahmen und dem Mittelschlitten ist zu dessen Verstellung ein Kettentrieb am Tragrahmen vorgesehen mit einem reversierbaren Antriebsmotor und besteht die Antriebsverbindung zur Verstellung des Oberschlittens in Abhängigkeit der Relativbewegung zwischen dem Tragrahmen und dem Mittelschlitten durch gegengleich verlaufende, bevorzugt durch Zahnriemen gebildete strangförmige Übertragungsmittel mit jeweils Fixverankerungen am Tragrahmen und Oberschlitten und Umlenkung über frei drehbar am Mittelschlitten in entgegengesetzten Endbereichen angeordneten Umlenkrädern.

Aufgabe der Erfindung ist es nunmehr ein teleskopierbares Lastaufnahmemittel zu bilden, welches sich bei einfacher Bauweise durch eine minimierte Bauhöhe und geringes Gewicht und damit hoher Nutzlast- und kurzen Umschlagstakten auszeichnet.

Diese Aufgabe der Erfindung wird durch die im Kennzeichenteil des Anspruches 1 wiedergegebenen Merkmale erreicht. Durch die getrennte Anordnung von Führungsebenen für die Höhenführung und einer dazu senkrecht ausgerichteten Führungsebene für die Seitenführung werden in Kombination mit der zu den Führungsebenen in einer winkelig dazu verlaufenden Führungsebene erstreckenden Übertragungsmittel einer Übertragungsvorrichtung kleine Querschnittsabmessungen für die in den Regalbereich zur Einlagerung bzw. Auslagerung von Ladehilfsmitteln einzufahrenden Tischen erreicht. Durch die ebenfalls erzielbare hohe Führungsgenauigkeit wird in Summe die freizuhaltende Einfahrhöhe zwischen einer Ladehilfsmittelunterseite und einer Ladehilfsmitteloberseite klein gehalten, wodurch ein mit dem erfindungsgemäßen Ladehilfsmittel bedientes Regallager einen hohen Belegungsfaktor, d.h. einen kleinen Anteil, nicht nutzbarem Leervolumen zu gesamten Lagervolumen aufweist, was aber andererseits auch bei vergleichbaren Lagerungsvolumen kürzere Verfahrwege für die Transportvorrichtung bzw. für das Regelbediengerät bedeutet und all diese Faktoren die Wirtschaftlichkeit sowohl des Lagers wie auch der Transportvorrichtung wesentlich steigern.

Von Vorteil sind dabei weiters Ausbildungen wie in den Ansprüchen 2 bis 7 gekennzeichnet, weil dadurch für die lasttragenden Komponenten hohe Festigkeitswerte bei geringem Eigengewicht erreicht werden, wodurch es möglich ist, bei wirtschaftlichem Energieeinsatz hohe Geschwindigkeiten im Fahrbetrieb des Regalbediengeräts und Verstellbewegungen der mit dem Lastaufnahmemittel bestückten Ladeplattform und des Teleskoptisches zu erreichen und damit eine Verkürzung der Ein- und Auslagerungstaktzeit und einen hohen Nutzlastfaktor zu erzielen.

Dabei weisen insbesondere faserverstärkte Verbundbauteile mit Kunststoff als Verbundstoff verstärkt mit Glas-, Kohle- oder Keflarfasern einen hohen Elastizitätsmodul auf wodurch die Bauteile eine hohe Biegesteifigkeit aufweisen und daher im Verhältnis zu Bauteilen aus anderen Materialien z. B. aus Al- Legierung kleiner dimensionierbar sind. Des Weiteren ist neben der erzielbaren hohen Festigkeit ein kostengünstiger Material- und Fertigungseinsatz von Vorteil für die Gesamtwirtschaftlichkeit eines damit ausgerüsteten Lagers.

Eine wie im Anspruch 8 gekennzeichnete Ausbildung ermöglicht die Anwendung kostengünstiger standardisierter Maschinenelemente.

Vorteilhaft sind aber auch die Ausbildungen wie in den Ansprüchen 9 bis 14 gekennzeichnet, weil der Einsatz von Gleitführungen eine spielfreie und leichtgängige und auch verschleißarme Lagerung ermöglicht und die Anwendung der gekennzeichneten Führungselemente die Montage wie auch einen späteren Wartungsaufwand vereinfacht. Besonders vorteilhaft haben sich dabei als Führungselemente Kunststoffprofile aus gleitfreundlichem Kunststoffmaterial oder Profile mit einer an Gleitflächen angeordneten Gleitschicht ergeben, wodurch eine besonders reibungsarme und verschleißfeste Ausbildung der Führungsanordnungen erreicht wird.

Möglich ist dabei eine vorteilhafte Weiterbildung wie in den Ansprüchen 16 und 17 beschrieben, weil dadurch vereinfachte Führungsanordnungen und damit vereinfachter Untertischaufbau erreicht und die Baubreite des Teleskoptisches und damit des Lastaufnahmemittel und insgesamt das Eigengewicht reduziert wird.

Gemäß den in den Ansprüchen 18 bis 20 beschriebenen vorteilhaften Ausbildungen ist auch eine entsprechende Führungsqualität, wie bereits vorhergehend beschrieben, als Seitenführung für die relativ zueinander verstellbaren Teleskoptischkomponenten erreicht.

Von Vorteil ist dabei auch eine Ausbildung nach Anspruch 21, wodurch durch unterschiedliche verwendete Materialien für Obertisch und/oder Untertisch sich ergebende unterschiedliche Reibungszahlen und Verschleißfaktoren vermieden werden.

Die im Anspruch 22 beschriebene Ausbildung gewährleistet eine niedere Bauhöhe für den Zwischentisch und damit eine Gewichtsersparnis.

In den Ansprüchen 23 bis 29 sind nunmehr vorteilhafte Ausbildungen beschrieben, mit denen die auf dem Lastaufnahmemittel aufgenommenen Ladehilfsmitteln unabhängig von deren Gewicht im Leerzustand oder beladen auch bei hohen Beschleunigungs- und Verzögerungskräften absturzfrei gesichert werden. Eine mögliche Ausführungsform besteht dabei in der gekennzeichneten Hebelanordnung, wobei die Sicherungsstellung eines Sicherungsmittels selbsttätig durch Einwirken der Belastung durch das Ladehilfsmittel erreicht wird.

Wie aber weiters, insbesondere dem Anspruch 28 zu entnehmen, sind auch derartige Sicherungsmittel, die über eine unabhängige Antriebsvorrichtung z.B. einem Elektromagnet verstellt werden, ebenfalls möglich.

Gemäß der im Anspruch 29 beschriebenen vorteilhaften Weiterbildung ist die Absicherung des Ladehilfsmittels auf dem Obertisch des Teleskoptisches auch im eingefahrenen Zustand, d.h. dann, wenn die Ladehilfsmittel auf den seitlich des Teleskoptisches verlaufenden Endlosförderern abgestützt sind, erreicht.

Zum besseren Verständnis der Erfindung wird diese anhand der in den Figuren gezeigten Ausführungsbeispielen näher erläutert.

### Es zeigen:

- Fig. 1: ein Regallager und eine Transportvorrichtung, insbesondere Regalbediengerät, mit auf einer Ladeplattform angeordneter, erfindungsgemäßer teleskopierbarer Lastaufnahmevorrichtung, in Ansicht;
- Fig. 2: eine Draufsicht des in Fig. 1 dargestellten Regallagers mit dem Regalbediengerät in schematischer Darstellung;
- Fig. 3: eine schematische Darstellung eines Teilbereichs eines Regallagers, mit erfindungsgemäßen Lastaufnahmemittel;
- Fig. 4: das Lastaufnahmemittel, mit dem in ein Regal eingefahrenen Teleskoptisch in Draufsicht;
- Fig. 5: das Lastaufnahmemittel geschnitten gemäß den Linien V-V in Fig. IV;
- Fig. 6: eine Sicherungsvorrichtung des erfindungsgemäßen Lastaufnahmemittels in Ansicht;
- Fig. 7: die Sicherungsvorrichtung in Draufsicht;
- Fig. 8: die Sicherungsvorrichtung mit einem zu sichernden Lastaufnahmemittel in Ansicht;
- Fig. 9: ein Detail eines Lagerregals mit einem für eine Ist-Positionsjustierung des Lastaufnahmemittels ausgebildeten Winkelprofil des Regals, geschnitten gemäß den Linien IX - IX in Fig. 4.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

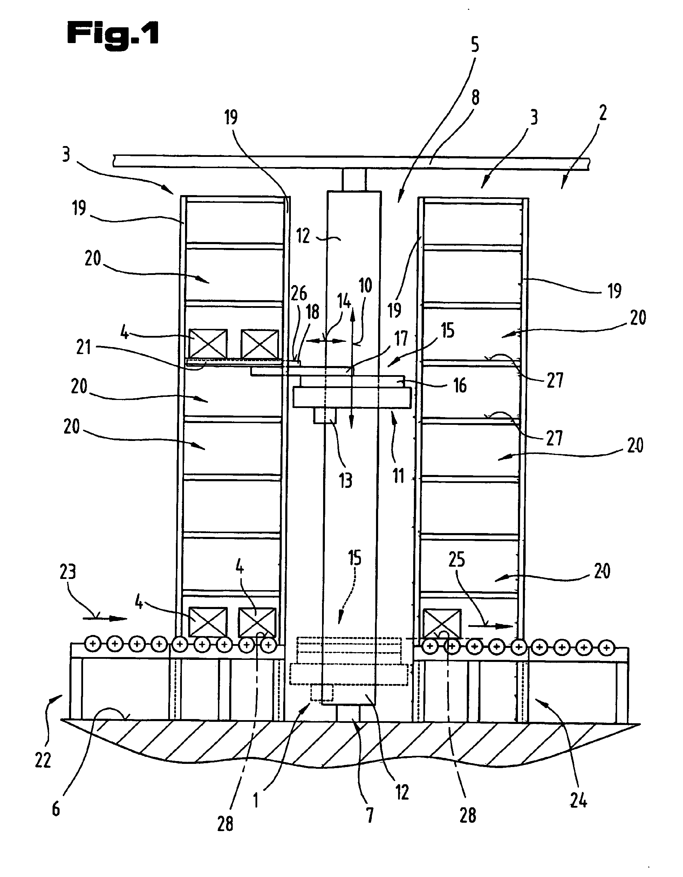

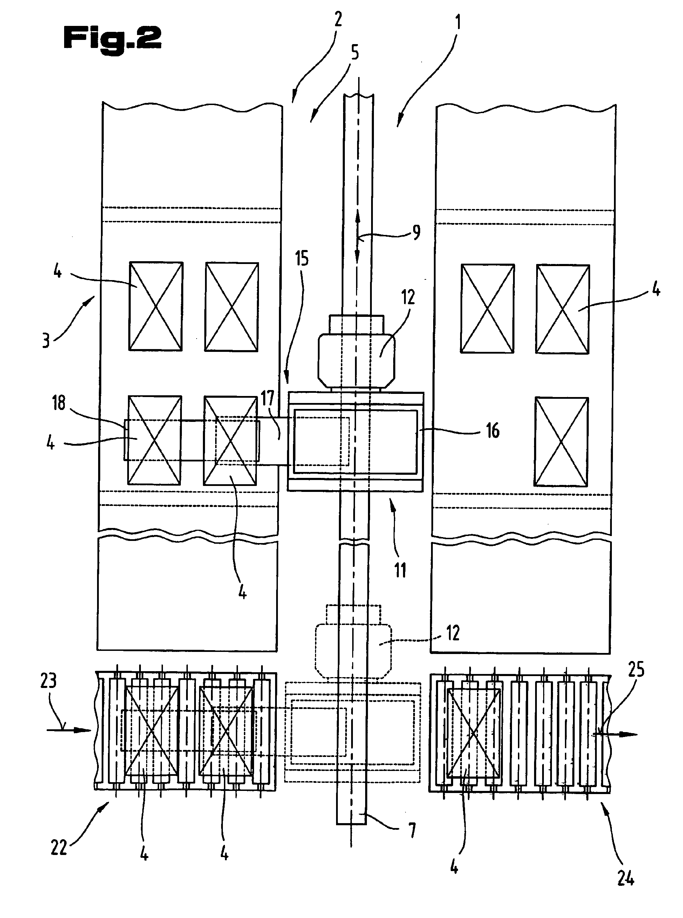

In den Fig. 1 und 2 ist eine Transporteinrichtung, insbesondere Regalbediengerät 1, und ein Regallager 2 am Beispiel eines Hochregallagers mit Regalen 3,3' zur Lagerung von Ladehilfsmitteln 4, insbesondere Behältnisse, Karton, etc., in Ansicht gezeigt. Das Regalbediengerät 1 ist hier beispielhaft in einer zwischen zwei voneinander distanzierten Regalen 3, vorgesehenen Regalgang 5 entlang von auf einer Aufstandsfläche 6 verlaufenden Schiene 7 sowie einer an einer Decke 8 des Regallagers 2 mit nicht weiters dargestellten Fahrwerken und zumindest einer Antriebsanordnung in Gassenrichtung gemäß - Doppelpfeil 9 - verfahrbar ausgebildet. Derartige Regalbediengeräte 1 mit einer in der Höhe - gemäß Doppelpfeil 10 - verfahrbaren Lastaufnahmemittel 11 sind bereits allgemeiner Stand der Technik und beispielsweise aus der DE 44 05 952 A1 oder DE 195 34 291 A1 bekannt.

Es ist aber zu erwähnen dass das erfindungsgemäße Lastaufnahmemittel 11 auch auf andere Geräten, Hubfahrzeugen etc. zur Bedienung eines Lagers oder Durchführung von in Ladehilfsmittel zu transportierenden Waren einsetzbar ist.

Das in Richtung der Höhe eines senkrecht zur Aufstandsfläche 6 erstreckenden Mastes 12 verstellbare Lastaufnahmemittel 11 ist über nicht weiters dargestellte Höhen- und/oder Seitenführungsorgane auf zumindest einer Führungsbahn am Mast 12 geführt und über eine Antriebseinrichtung 13 entlang der Führungsbahnen im wesentlichen vertikal verstellbar. Das Lastaufnahmemittel 11 ist mit einer - gemäß Doppelpfeil 14 - in zur Aufstandsfläche 6 parallel verlaufenden Ebene verstellbaren Teleskoptisch 15, der bevorzugt aus einem Untertisch 16, einem Zwischentisch 17 und einem Obertisch 18 gebildet ist, bestückt.. Mit diesem sind ausgehend von dem Regalgang 5 wahlweise die beidseits angeordneten Regale 3, wie dargestellt Doppelregel, zur Ein- und Auslagerung der Ladehilfsmittel 4 zu bedienen und zwar unabhängig, ob das dem Regalgang 5 benachbarte Lastaufnahmemittel 4 oder das von dem Regalgang 5 entfernte Ladehilfsmittel 4, oder beide gemeinsam ein- bzw. auszulagern sind. Wie aus der Fig. 1 ersichtlich, weist jedes der Regale 3 mehrere vertikal zur Aufstandsfläche 6 angeordnete Regalsteher 19 und zwischen diesen in horizontalen Ebenen distanziert voneinander angeordnete Regalfächer 20 auf. Winkelprofile 21 sind horizontal und parallel zur Aufstandsfläche 6 ausgerichtet und ermöglichen die Lagerung innerhalb eines Regalfaches 20 in mehreren Reihen hintereinander. Zu erwähnen ist, dass die Regale 3 selbstverständlich auch in Form von nicht dargestellten Einzelregalen gebildet sein können, wobei die wirtschaftlichere Lösung die der Doppelregale, wie im Ausführungsbeispiel gezeigt, darstellen.

Wie in der Fig. 1 weiters gezeigt, ist dem Regalbediengerät 1 bevorzugt zu Beginn und/oder am Ende des Regalganges 5 eine die Ladehilfsmittel 4 transportierende Zufördereinrichtung 22, insbesondere ein Rollenförderer, vorgeordnet. Die Ladehilfsmitteln 4 werden in Richtung zum Regalbediengerät 1 - gemäß Pfeil 23 - gefördert. Dem Regalbediengerät 1 nachgeordnet ist eine Abfördereinrichtung 24, insbesondere ein Rollenförderer. Die Ladehilfsmitteln 4 werden vom Regalbediengerät 1 - gemäß Pfeil 25 - abtransportiert. Anstelle der Rollenförderer können natürlich auch Bandförderer verwendet werden. Als dem Regalbediengerät 1 vorgeordnete Zufördereinrichtung 22 kann ein aus dem Stand der Technik bekannter Staurollenförderer zum akkumulierten Fördern der Ladehilfsmittel 4, z.B. Behältnisse, Karton eingesetzt werden.

Wie aus den Fig. 1 und 2 ersichtlich, ist der Obertisch 18 des Teleskoptisches 15 im Bezug auf die Verstellrichtung des Regalbediengerätes 1 nach beiden Richtungen teleskopartig aus- und einfahrbar. Ist zumindest ein Ladehilfsmittel 4 von der Ladeplattform 11 in ein Regalfach 20 einzulagern oder vom Regalfach 20 auf die Ladeplattform 11 zu übernehmen, wird das Regalbediengerät 1 mit seiner Ladeplattform 10 vor dem betreffenden Regalfach 20 in Gangrichtung - gemäß Doppelpfeil 9 - und in Richtung der Höhe des Mastes 12 derart positioniert, dass eine Auflagefläche 26 des Obertisches 18 für die Ladehilfsmitteln 4 gering unterhalb einer durch die Winkelprofile 21 gebildeten Stützflächen 27 positioniert ist und zentrisch vor dem zumindest einem ein- bzw. auszulagernden Ladehilfsmittel 4 positioniert ist. Nach dem Einfahren des Obertisches 18 in das Regal 3 erfolgt ein Aufheben des Ladehilfsmittels 4 durch ein Hochfahren der Ladeplattform 11. Nach dem Abheben erfolgt das Einfahren des Obertisches 18 bis dieser eine zentrische Lage mit dem feststehenden Untertisch 16 einnimmt.

Andererseits, ist über das Lastaufnahmemittel 11 zumindest ein Ladehilfsmittel 4 von der Zufördereinrichtung 22 zu nehmen bzw. zumindest ein auf dem Lastaufnahmemittel 11 befindliches Ladehilfsmittel 4 an die dem Regalbediengerät 1 nachgeordnete Abfördereinrichtung 24 abzugeben, wird das Regalbediengerät 1 bzw. das Lastaufnahmemittel 11 vor der Zu-oder Abfördereinrichtung 22; 24 derart in Gangrichtung - gemäß Doppelpfeil 9 - und in Höhenrichtung positioniert, dass die parallel zur Aufstandsfläche 6 verlaufende Auflagefläche 26 des Obertisches 18 parallel und fluchtend zu einer Förderebene 28 der Zu- oder Abfördereinrichtung 22; 24 verläuft und der Teleskoptisch 15 zentrisch zu dem zumindest einen zu entnehmenden Ladehilfsmittel 4 positioniert ist, worauf das zumindest eine Ladehilfsmittel 4 vom Teleskoptisch 15 übernommen oder von diesem abgegeben werden kann.

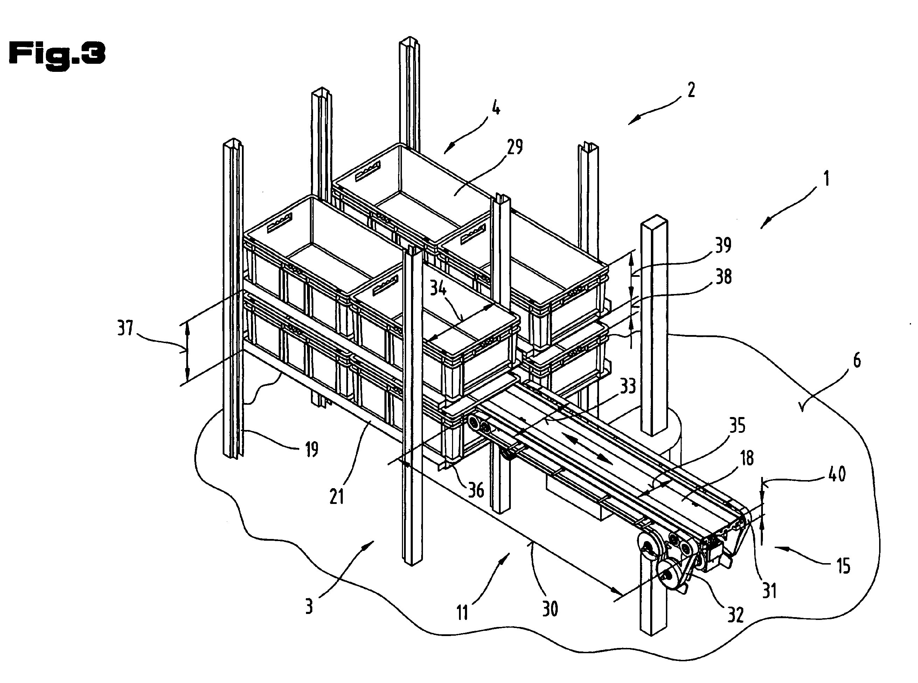

In der Fig. 3 ist in einer schematischen, vereinfachten Darstellung ein Bereich des Regallagers 2 mit den eingelagerten Ladehilfsmitteln 4, z.B. Leergebinde 29, gezeigt, sowie das Regalbediengerät 1 mit dem Lastaufnahmemittel 11 mit dem Teleskoptisch 15. Beidseits des Teleskoptisches 15 sind über eine eingefahrene Länge 30 des Teleskoptisches 15 erstreckend, ein Zweispurförderer mit synchron betriebenen Endlosförderern 31, 32 z.B. Bandförderer vorgesehen. Eine Gesamtbreite 33 entspricht dabei in etwa einer Außenabmessung 34 des Ladehilfsmittels 4. Eine Breite 35 des Obertisches 18 ist kleiner als ein freier Zwischenraum zwischen aufeinander zuragender Schenkeln 36 der Auflagerprofile 21 für die Lagerhilfsmittel 4 im Regal 3 und die an den Regalstehern 19 in zur Aufstandsfläche 6 parallel verlaufenden Richtung und in Richtung einer Regaltiefe befestigt sind. Ein Abstand 37 zwischen den in Höhenrichtung der Regalsteher 19 beabstandeten Auflagerprofilen 21 ist um eine erforderliche freie Einfahrhöhe 38 größer als eine Höhenabmessung 39 des Ladehilfsmittels 4, wobei die erforderliche Einfahrhöhe 38 abhängig ist von einer Gesamtbauhöhe 40 von Obertische 15 und Zwischentisch 16 sowie der zu erreichenden Positioniergenauigkeit der Ladeplattform 11. Es wird an späterer Stelle auf die Minimierung der Einfahrhöhe 38 durch steuerungs- und regelungstechnische Maßnahmen noch im Detail eingegangen werden, da diese Maßnahmen sehr wesentlich sind um nicht nutzbares Lagervolumen zu minimieren und ein wesentlicher Faktor für das Lagernutzvolumen bildet.

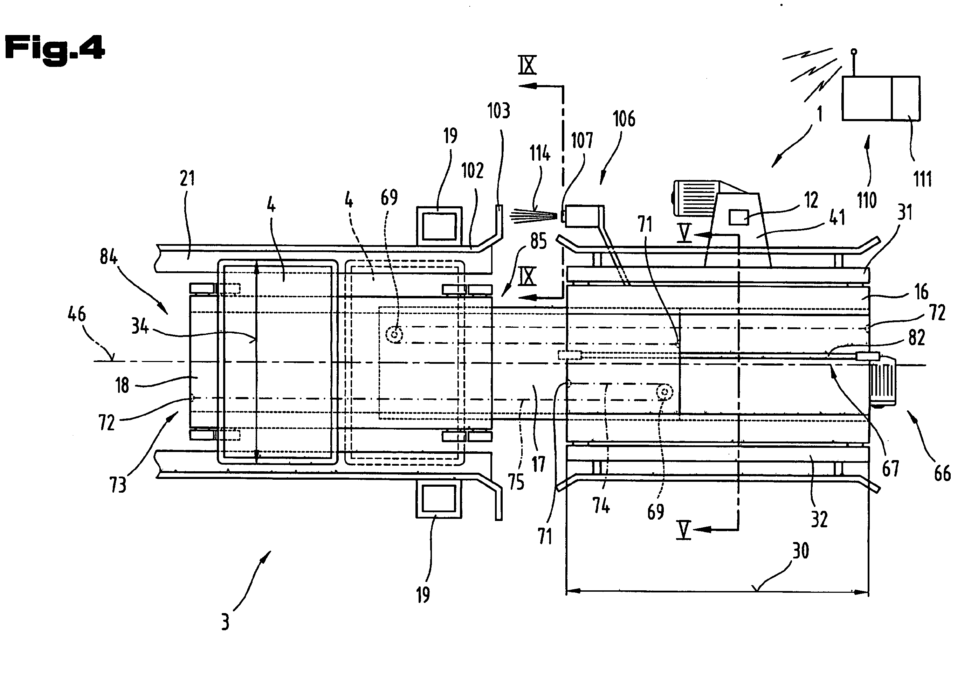

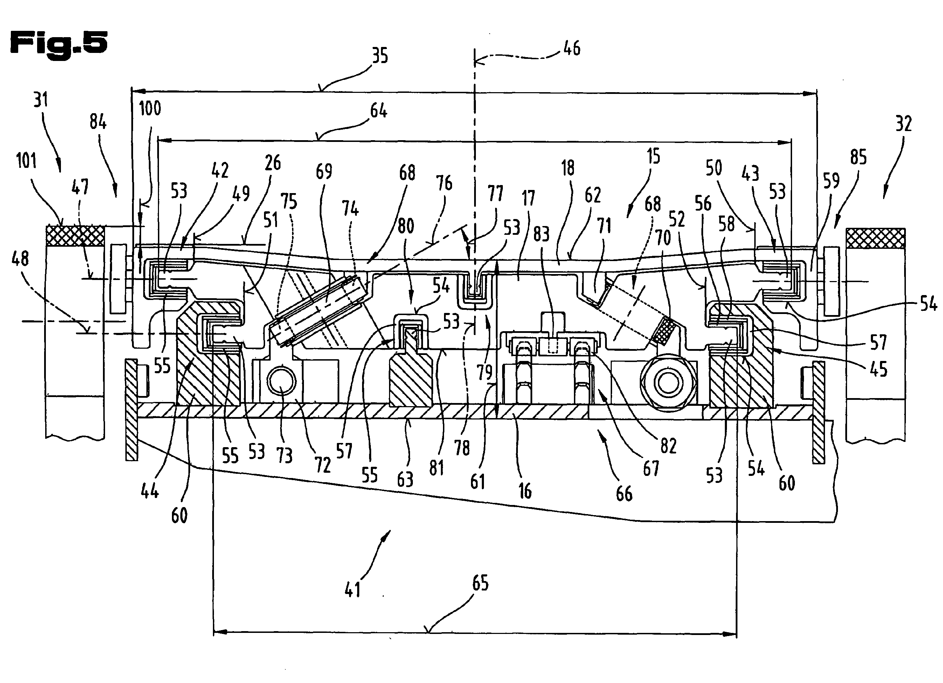

In den Fig. 4 und 5 ist nun im Detail der auf einem Traggestell 41 des Regalbediengerätes 1 und zwischen den Endlosförderern 31, 32 angeordnete Teleskoptisch 15 gezeigt. Dieser besteht aus dem am Traggestell 41 befestigten Untertisch 16, dem Zwischentisch 17 und Obertisch 18. Der Obertisch 18 und der Zwischentisch 17 sind zu dem Untertisch 16 und zueinander relativ in linear verlaufenden Führungsanordnungen 42, 43, 44, 45 verstellbar. Die etwa symmetrisch zu einer vertikal und in Verstellrichtung des Zwischentisches 17 und Obertisches 18 verlaufenden Mittelebene 46 angeordnet sind und parallel zueinander und parallel zur Auflagefläche 26 des Obertisches 18 beabstandete Führungsebenen 47, 48 für die verstellbare Lagerung des Obertisches 18 am Zwischentisch 17 und des Zwischentisches 17 am Untertisch 16 ausbilden.

Die Führungsanordnungen 42, 43, 44, 45 werden einerseits durch leistenförmige, abgestufte Seitenflächen 49, 50, 51, 52 des Zwischentisches 17 überragende und über die Länge 30 erstreckende Führungsfortsätze 53 und diesen zugeordnete, nutförmige Aufnahmen 54 des Obertisches 18 und des Untertisches 16 ausgebildet. Um unabhängig von den Eigenschaften der für den Untertisch 16, Zwischentisch 17 und Obertisch 18 verwendeten Materialen bestmöglichste Gleiteigenschaften sowie geringen Verschleiß zu erreichen, sind spezielle Führungselemente 55 als Gleitprofile 56 auf den leistenförmigen Führungsfortsätze 53 angeordnet - vorzugsweise über Form- oder Reibungsschluss und Klemmung befestigt und sind andererseits in den nutförmigen Aufnahmen 54 die Gleitprofile 56 umfassend Gegenprofile 57 vorgesehen. Eine bevorzugte Ausbildung sind dabei U- Profile aus gleitfreundlichem Kunststoff als Gleitprofile 56 und für die Gegenprofile 57 vorzugsweise Metallprofile. Gegebenenfall können Gleitflächen ausbildende Oberflächen mit einer reibungsarmen, verschleißfesten Schicht 58 versehen sein.

Neben dem Vorteil der Verbesserung der Gleiteigenschaft sowie der Verschleißfestigkeit bilden die Führungselemente 55 mit geringem Aufwand in einem Wartungsfall tauschbare Ersatzteile aus und vereinfachen auch die Fertigung der Führungsfortsätze 53 und die Aufnahmen 54 an den Tischen.

Die nutförmigen Aufnahmen 54 des Obertisches 18 werden durch eine etwa C-förmige Profilierung von Seitenwänden 59, welche den Obertisch 18 in der Breite 35 begrenzen, erreicht.

Zur Ausbildung der Führungsanordnungen 44, 45, in denen der Zwischentisch 17 gegenüber dem Untertisch 16 verstellbar geführt sind, weist dieser über die Länge 30 erstreckende Stützleisten 60 auf, die in Richtung des Zwischentisches 17 ragend am Untertisch 16 befestigt sind und einander zugewandt die nutförmigen Aufnahmen 54 für die mit den Führungselementen 55 versehenen Führungsfortsätzen 53 aufweisen.

Der Zwischentisch 17 entspricht in seinem Querschnitt, mit dem die Führungsebenen 47, 48 ausbildenden, einstückig angeformten Führungsfortsätzen 53 im Wesentlichen einen flachen I-Träger mit einem Ober- und einem Untergurt, wodurch ein hohes Widerstandsmoment zur Aufnahme der Biegekräfte bei Belastung im ausgefahrenen Zustand erreicht wird.

Besonders vorteilhaft ist die Anwendung von faserverstärkten Verbundbauteilen - oder auch gewebearmierter oder mit metallischen Verstärkungselementen versehene Bauteile - bevorzugt für den Zwischentisch 17 und den Obertisch 18 sowohl aus Gründen der Biegesteifigkeit, des zu erzielenden niederen Gewichtes und den kostengünstigen Fertigungs- und Materialmöglichkeiten. Als Fasern sind beispielhaft Kohlefasern, Glasfasern Keflarfasern zu erwähnen. Als Verbundstoff kommt Kunststoff, insbesondere Polyesterharz bevorzugt zur Anwendung. Selbstverständlich sind aber auch Leichtmetall - Legierungen wie Al- oder Mg- Legierungen für die Anwendung möglich.

Zur Erzielung einer geringen Bauhöhe 61, zwischen einer Oberseite 62 des Obertisches 18 und einer Unterseite 63 des Untertisches 16, ist weiters ein stufenweiser Versatz der Führungsfortsätze 53 vorgesehen, wobei eine Gurtbreite 64 des so zu bezeichnenden Obergurtes größer ist als eine Gurtbreite 65 des so zu benennenden Untergurtes. Dadurch wird eine, im Bezug auf die Mittelebene 46, versetzte Anordnung der Führungsanordnungen 42, 43 und Führungsanordnungen 44, 45 und damit ein platzsparender Gesamtaufbau des Teleskoptisches 15 und damit die geringe Bauhöhe 61 erreicht.

Wie aus dem Stand der Technik bekannt, sind zur Erzielung der Relativbewegung zwischen dem Zwischentisch 17 und dem Obertisch 18 in Abhängigkeit der durch eine Antriebsvorrichtung 66 - im gezeigten Ausführungsbeispiel ein Zugmitteltrieb 67 - bewirkten Relativverstellung zwischen dem Untertisch 16 und dem Mitteltisch 17, Übertragungsvorrichtungen 68 mit über in entgegengesetzten Endbereichen des Zwischentisches 17 drehbar gelagerten Umlenkmitteln 69 verlaufenden strangförmigen Übertragungsmitteln 70, z.B. Bänder, Seile, Ketten, etc., gebildet.

Insgesamt sind wie bekannt zwei dieser Übertragungsvorrichtungen 68 vorgesehen, bei denen in gegengleicher Anordnung je ein strangförmiges Übertragungsmittel 70 z.B. Seil, Band, Kette etc. von einem Befestigungsmittel 71 am Obertisch 18 und einer etwa 180° Umschlingung des Umlenkmittels 69 zu einem weiteren Befestigungsmittel 72 führt mit das Übertragungsmittel 70 am Untertisch 16 bevorzugt über eine Spanneinrichtung 73 befestigt ist.

Um die Bauhöhe 61 gering zu halten, ist erfindungsgemäß vorgesehen, eine durch das Umlenkmittel 69 und von diesem in entgegen gesetzten Richtungen führende Stränge 74, 75 des Übertragungsmittels 70 gebildete theoretische Übertragungsebene 76 in einem Winkel 77 gegenüber der Aufnahmefläche 26 des Obertisches 18 anzuordnen, wobei der Winkel 77 in etwa zwischen 10 ° und 60 ° beträgt.

Es sei zusätzlich erwähnt, dass anstelle der mit einem scheibenförmigen Umlenkmittel 69 und einem strangförmigen Übertragungsmittel 70 gezeigten Übertragungsvorrichtung 68 bei gleicher Funktionsweise diese auch durch bewegungsfest am Untertisch 16 und Obertisch 18 angeordneten Zahnstangen und einer Anzahl von im Zwischentisch 17 frei drehbar angeordneter Zahnräder, die in Eingriff mit den Zahnstangen stehen, gebildet sein kann.

Wie nun weiters der Fig. 5 zu entnehmen, ist zur Erzielung einer spurtreuen Relativbewegung, d.h. um einen Seitenführungsspiel entgegen zuwirken, zumindest eine weitere, zu den Führungsebenen 47, 48 senkrecht und parallel zur Verstellrichtung angeordnete Führungsebene 78 vorgesehen, die im gezeigten Ausführungsbeispiel durch zwei zueinander seitlich versetzte Führungsanordnungen 79, 80 gebildet wird, die wie bereits vorhergehend beschrieben, ausgebildet sind und in Längsrichtung verlaufend die nutförmigen Aufnahmen 54 im Zwischentisches 17 angeordnet sind in denen die mit den Führungselementen 58 versehenen, mit dem Obertisch 18 und dem Untertisch 16 verbundenen Führungsfortsätze 53 einragen. Damit wird eine exakte Seitenführung über den gesamten Verstellweg erreicht.

Eine entsprechende Seitenführung und damit die senkrecht verlaufende Führungsebene 78 kann aber auch durch eine nahezu spielfreie seitliche Führungsausbildung der Führungsanordnungen 42, 43, 44, 45 erreicht werden.

Wie bereits erwähnt, ist im gezeigten Ausführungsbeispiel die Antriebsvorrichtung 66 durch einen Zugmitteltrieb 67 mit endlos umlaufender Mehrfachkette insbesondere einer Triplex-Kette gebildet, der am Untertisch 16 angeordnet ist und einen parallel zu einer Unterseite 81 des Zwischentisches 17 geführten Kettenstrang 82 aufweist. Außenketten der Triplex- Kette sind über Antriebs- und Umlenkräder geführt, während der mittlere Strang mit-einer auf der Unterseite 81 des Zwischentisches 17 befestigen und in Richtung der Längserstreckung verlaufenden Zahnleiste 83 in Eingriff steht. Zur Erzielung hoher Antriebsleistungen, insbesondere Aufnahme hoher Beschleunigungs- und Verzögerungskräfte kann die Kette z.B. auch eine sogenannte Quattro- Kette sein die mit zwei parallel verlaufenden Zahnleisten kämmt.

Mit einer derartigen Antriebsausbildung bei der Antriebs- und Umlenkräder mit Außensträngen der Kette kämmen und zumindest ein mittlerer Kettenstrang für den Eingriff der Zahnleiste 38 über die gesamte Länge des Verlaufes nutzbar ist wird gegenüber einem Kettentrieb mit endlos umlaufender Kette eine Erhöhung des Gesamtverstellweges des Teleskoptisches 15 um 10% bis 25% erreicht wobei die Grenze von einer erforderlichen Überdeckung in den Führungsanordnungen gezogen ist. Diese Erweiterung des Gesamtverstellweges erhöht somit die Reichweite des Teleskoptisches wodurch bei der Zweifachlagerung eine sicheres Unterfahren des Obertisches des in der zweiten Position abgestellten Ladehilfsmittels auch dann noch erreicht wird wenn dieser auch geringfügig weiter von der Regalmitte als standardgemäß vorgesehen entfernt abgestellt ist.

Damit liegt aber auch eine erprobte und bewährte Antriebsvorrichtung 66 vor, wobei jedoch erwähnt wird, dass selbstverständlich auch andere Lösungen für den Antrieb zur Anwendung gelangen können und werden unter anderem als weitere Beispiele ein Spindeltrieb oder ein Zahnrad- / Zahnstangentrieb angegeben.

Generell ist festzuhalten, dass das Regalbediengerät 1 mit der Ladeplattform 11 und dem Teleskoptisch 15, insbesondere durch eine Leichtbauweise der Ladeplattform 11 für eine hohe Transportleistung durch hohe Verfahrgeschwindigkeiten ausgelegt ist, um die Ein- und Auslagertaktzeiten zu minimieren. Um den dazu erforderlichen hohen Beschleunigungen und den dabei auftretenden Trägheitskräften Rechnung zu tragen sind zur Sicherung der Ladehilfsmittel 4 vor einem Absturz vom Teleskoptisch 15 am Obertisch 18, wie den Fig. 4 und 5 zu entnehmen, an entgegengesetzten Endbereichen 84, 85 Sicherungsvorrichtung 86 angeordnet, welche bevorzugt an den Längsseitenwänden 59 des Obertisches 18 vorgesehen sind.

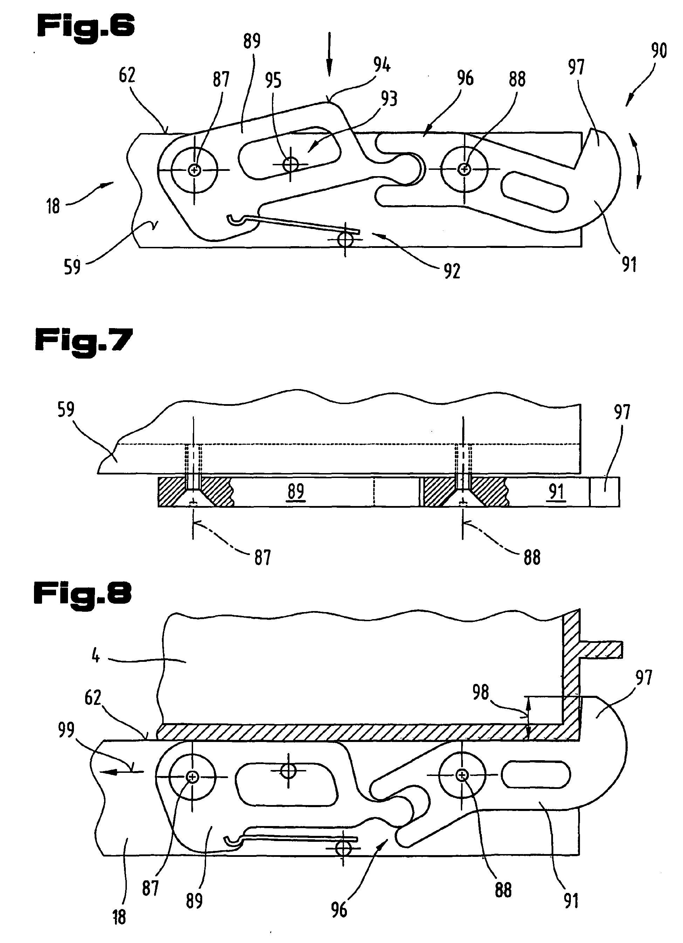

In den nachfolgend beschriebenen Fig. 6 und 7 ist nun im Detail eine mögliche Ausbildung einer Sicherungsvorrichtung 86 gezeigt und anhand der weiteren Fig. 8 deren Funktionsweise zur Absicherung eines vom Obertisch 18 aufgenommenen Ladehilfsmittel 4 erläutert.

Nach diesem Ausführungsbeispiel besteht die Sicherungsvorrichtung 86 aus einer Hebelanordnung mit einem um eine zur Oberseite 62 des Obertisches 18 parallel verlaufenden Schwenkachsen 87 schwenkbaren, und einem um eine weitere Schwenkachse 88 schwenkbaren Einfachhebelelement 89 und einem mit einer Sperrklinke 90 ausgebildeten Doppelhebelelement 91. Weiters weist die Sicherungsvorrichtung 86 eine Federanordnung 92 und ein Anschlagmittel 93 auf, durch die eine Grundstellung des Einfachhebelelements 89 in einer die Oberseite 62 des Obertisches 18 mit einem von der Schwenkachse 87 distanzierten Betätigungsbereich 94 überragt und in dieser Stellung durch die Federkraft der Federanordnung 92 gegen das Anschlagmittel 93, insbesondere gegen einen die Seitenwand 59 überragenden Anschlagbolzen 95, positioniert ist. Das Einfachhebelelement 89 ist mit dem Doppelhebelelement 91 in einer ineinander greifenden Kulissenausbildung 96 in Bewegungsverbindung. Der Kulissenausbildung 96, im Bezug auf die Schwenkachse 88 des Doppelhebelelementes 91 entgegengesetzt, weist der weitere Hebelarm einen hackenförmigen Sperrfortsatz 97 auf, der in der Grundstellung die Oberseite 62 des Obertisches 18 nicht überragt.

Wie nun aus der Fig. 8 zu entnehmen, wird bei Aufnahme des Ladehilfsmittels 4 auf den Obertisch 18 das Doppelhebelelement 91 infolge des Gewichtes des Ladehilfsmittels 4 mit dem Betätigungsbereich 94 entgegen der Wirkung der Federanordnung 92 um die Schwenkachse 87 in eine mit dem Betätigungsbereich 94 fluchtende Lage zur Oberseite 62 verschwenkt. Dies bewirkt andererseits durch die Kulissenausbildung 96 zwischen dem Einfachhebelelement 89 und dem Doppelhebelelement 91 eine Schwenkbewegung des Doppelhebelelements 91 um die Schwenkachse 88, wodurch der hakenförmige Sperrfortsatz 97 in der Endlage, bei der dieser die Oberseite 62 des Obertisches 18 um eine Hackenhöhe 98 überragt, verstellt wird und somit das Ladehilfsmittel 4 gegen Verrutschen bei Verstellung des Obertisches 18 gemäß - Pfeil 99 - sichert.

Es sei nochmals erwähnt, dass derartige Sicherungsvorrichtung 86 an beiden Seitenwänden 59 und den Endbereichen 84, 85 vorgesehen sind, wodurch unabhängig von der Bewegungsrichtung des Obertisches 18 eine verlässliche Sicherung des Ladehilfsmittels am Obertisch 18 gewährleistet ist.

Weiters sei noch erwähnt, dass die beschriebene Sicherungsvorrichtung 86 nur eine mögliche Ausbildung darstellt und weitere Ausbildungen durchaus im Bereich der Möglichkeit sind, deren Wirkungsweise darauf abzielt, ein Sperrmittel in zur Oberseite 62 des Obertisches senkrechter Richtung aus einer die Oberseite 62 nicht überragende, in eine diese überragende Stellung zu verstellen. Selbstverständlich können dies auch mit einem separaten Antrieb, wie z.B. mittels eines Elektromagnet oder Elektromotor betriebe Sperrmittel sein.

Bei der Dimensionierung der Hakenhöhe 98, um die die Auflagerfläche 26 des Obertisches 18 überragt wird, ist - wie aus Fig. 5 ersichtlich - eine Distanz 100 zu berücksichtigen, um die eine Auflagerfläche 101 des Ladehilfsmittels 4 auf den Endlosförderer 31, 32 - wie erwähnt ein Zweispurförderer - über der Auflagerfläche 26 angeordnet ist, da die Ladehilfsmittel 4 in vollständig eingefahrenem Zustand des Teleskoptisches 15 auf der etwas erhöhten Auflagerfläche 101 des Endlosförderers 31, 32 aufliegen. Damit ist bei der Dimensionierung der Hakenhöhe 98 diese Distanz 100 mit zu berücksichtigen.

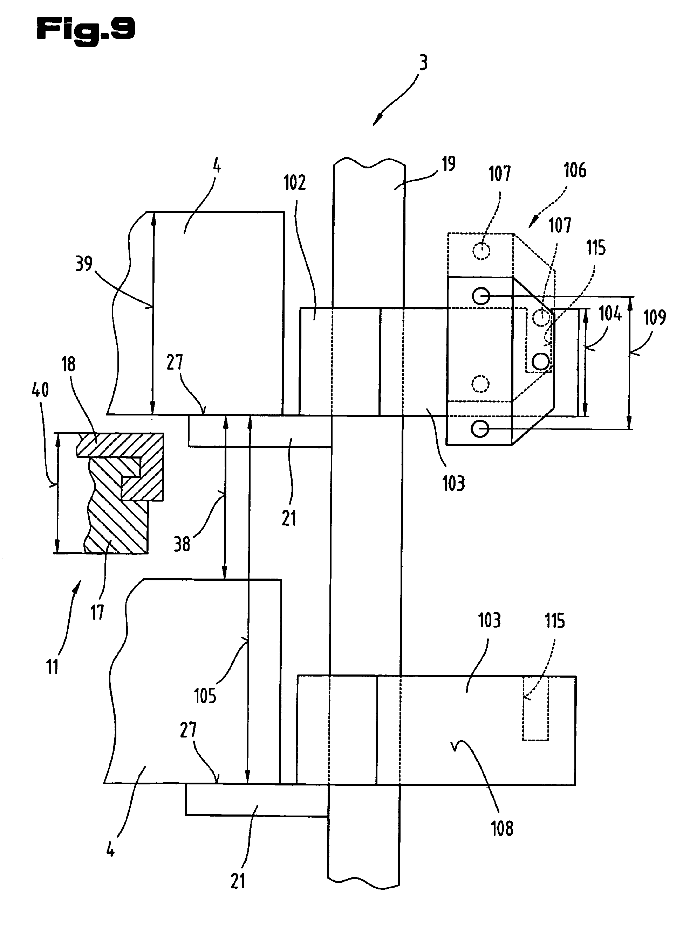

In Ergänzung der Fig. 4 wird auf eine erfindungsgemäße Ausbildung der Winkelprofile 21 zur Auflagerung der Ladehilfsmittel 4 im Regal 3 hingewiesen und dies anhand der Fig. 9 noch näher erläutert. Danach ist vorgesehen zumindest an einem der gegenüberliegenden Winkelprofile 21 einen Schenkel 102 mit dem dieser am Regalsteher 19 befestigt ist, in seinem dem Lastaufnahmemittel 11 zugewandtem Endbereich durch eine winkelige Ausbildung eine Einführschräge zu geben und daran anschließend durch eine weitere Abwicklung eine flächige Positionierfahne 103, in einer zur Verstellrichtung des Teleskoptisches 15 - gemäß Doppelfeil 14 - senkrecht verlaufenden Ebene auszubilden. Diese Positionierfahne 103 weist somit beispielsweise eine Höhe 104 entsprechend einer Schenkelhöhe des Winkelprofils 21 auf.

Ein in vertikaler Richtung verlaufender Höhenabstand 105 zwischen den Stützflächen 27 der Winkelprofile 21 entspricht dabei der vorgesehenen Höhenabmessung 39 der Ladehilfsmittel 4, zuzüglich der erforderlichen Einfahrhöhe 38, die sich aus der Gesamthöhe 40 des Zwischentisches 17 und des Obertisches 18, zuzüglich eines Sicherheitsfreiraumes der von der Positioniergenauigkeit des Regalbediengeräts 1 mit dem Lastaufnahmemittel 11 abhängig ist, ergibt.

Um diese Positioniergenauigkeit in engsten Grenzen zu halten und damit das nicht nutzbare Lagerleervolumen zu minimieren, ist am Lastaufnahmemittel 11 bevorzugt am feststehenden Untertisch 16 mittels einer Strebe eine bevorzugt opto-elektronische Positionserfassungseinrichtung 106, bestückt mit der Positionierfahne 103 zugewandten Lichtsensoren 107 angeordnet.

Bevorzugt ist die Positionserfassungseinrichtung 106 mit zwei zueinander in einem vertikalen Abstand 109 angeordneten Lichtsensoren 107 versehen, wobei der Abstand 109 gering größer ist als die Höhe 104 der Positionierfahne 103.

Eine derartige Anordnung und Ausbildung einer Positionserfassungseinrichtung 106 dient in Verbindung mit einer Steuereinrichtung 110, die integriert einen Rechner 111 aufweist und über Leitungen oder wie dargestellt drahtlos mit einem übergeordneten Zentralrechner 112 und der an diesem angeschlossenen Steuer- und Regeleinrichtung 113 des Regalbediengeräts 1 in Signalverbindung steht für eine Feinpositionierung des Lastaufnahmemittels 11 von einer theoretisch vorgegebenen Soll-Position auf eine regalplatzbezogene Ist-Position, womit der Einfahrquerschnitt für das Lastaufnahmemittel 11 minimiert werden kann.

Eine weitere von der Art der verwendeten Lichtsensoren abhängige Ausbildung können Reflexionslichtsensoren bilden wobei dann der Abstand 109 gering kleiner als die Höhe 104 zu wählen ist.

Die beschriebene Anordnung ist maßgeblich für eine Feinpositionierung des Lastaufnahmemittels 11 in der Y-Achse wobei in der Fig. 9 in strichlierten Linien z.B. die Stellung der Lichtsensoren 107 nach einer erfolgten Soll- Positionierung gezeigt ist und in vollen Linien nach erfolgter Nachpositionierung in die IST - Position, wie dies noch später beschrieben ist.

Es ist aber nicht auszuschließen, eine derartige Feinpositionierung auch für die X-Achse einzusetzen, wobei bevorzugt an beiden, einander gegenüberliegenden Winkelprofilen 21 derartige Positionierfahnen 103 vorgesehen sind und am Lastaufnahmemittel 11 zwei Positionserfassungseinrichtungen 106 vorgesehen sind, die etwa im Mittel zwischen den auf den Abstand 109 gesetzten Lichtsensoren 107, wie der Fig. 9 zu entnehmen, zumindest einen weiterer Lichtsensoren 107 aufweist und die paarweise zur Erfassung einer Positionsabweichung in der X-Achse beispielsweise durch Abtastung eines in der Positionierfahne 103 vorgesehenen Einschnittes 115.

Grundsätzlich wird das Lastaufnahmemittel 11 an ein vorgesehenes Regel, entsprechend den im Zentralrechner 112 hinterlegten Positionsdaten, also auf eine Soll-Position zur Entnahme des Ladehilfsmittels 4 verfahren. Um nun etwaige Abweichungen zwischen der Soll-Position und einer tatsächlichen Ist-Position, wie sie sich gegebenenfalls durch Lagerbelastungen, Wärmedehnungen der Regalanlage und des Baukörpers ergeben können, zu berücksichtigen, wird mittels der Positionserfassungseinrichtung 106 die Signale der Lichtsensoren 107 in der Steuereinrichtung 110 oder im Zentralrechner 112, gemäß einer hinterlegten Positionsmatrix, analysiert und entsprechende Ansteuerungsbefehle für die Antriebsanordnungen des Regalbediengeräts 1 zur Verstellung in Richtung der X-Achse und des Lastaufnahmemittels 11 zur Verstellung in der Y-Achse bewirkt und damit aufgrund der Signale der opto-elektronischen Erfassungseinrichtung 106 auf die exakte Ist-Position geregelt, bei der z.B. die von den Lichtsensoren 107 ausgesandten Lichtstrahlen 114 auf die Oberfläche 108 der Positionierfahnen 103 auftreffen.

Die Ausführungsbeispiele zeigen mögliche Ausführungsvarianten des Lastaufnahmemittels, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die unter die Ansprüche fallen vom Schutzumfang mitumfaßt.

Der Ordnung halber sei abschließend darauf hingewiesen, dass zum besseren Verständnis des Aufbaus des Lastaufnahmemittels dieses bzw. dessen Bestandteile teilweise unmaßstäblich und/oder vergrößert und/oder verkleinert dargestellt wurden.

### Bezugszeichenaufstellung

- 1: Regalbediengerät
- 2: Regallager
- 3: Regal
- 4: Ladehilfsmittel
- 5: Regalgang

- 6: Aufstandsfläche
- 7: Schiene
- 8: Decke
- 9: Doppelpfeil
- 10: Doppelpfeil

- 11: Lastaufnahmemittel
- 12: Mast
- 13: Antriebseinrichtung
- 14: Doppelpfeil
- 15: Teleskoptisch

- 16: Untertisch
- 17: Zwischentisch
- 18: Obertisch
- 19: Regalsteher
- 20: Regalfach

- 21: Winkelprofil
- 22: Zufördereinrichtung
- 23: Pfeil
- 24: Abfördereinrichtung
- 25: Pfeil

- 26: Aufnahmefläche
- 27: Stützfläche
- 28: Förderebene
- 29: Leergebinde
- 30: Länge

- 31: Endlosförderer
- 32: Endlosförderer
- 33: Gesamtbreite
- 34: Außenabmessung
- 35: Breite

- 36: Schenkel
- 37: Abstand
- 38: Einfahrhöhe
- 39: Höhenabmessung
- 40: Gesamthöhe

- 41: Traggestell
- 42: Führungsanordnung
- 43: Führungsanordnung
- 44: Führungsanordnung
- 45: Führungsanordnung

- 46: Mittelebene
- 47: Führungsebene
- 48: Führungsebene
- 49: Seitenfläche
- 50: Seitenfläche

- 51: Seitenfläche
- 52: Seitenfläche
- 53: Führungsfortsatz
- 54: Aufnahme
- 55: Führungselement

- 56: Gleitprofil
- 57: Gegenprofil
- 58: Schicht
- 59: Seitenwand
- 60: Stützleiste

- 61: Bauhöhe
- 62: Oberseite
- 63: Unterseite
- 64: Gurtbreite
- 65: Gurtbreite

- 66: Antriebsvorrichtung
- 67: Zugmitteltrieb
- 68: Übertragungsvorrichtung
- 69: Umlenkmittel
- 70: Übertragungsmittel
- 71: Befestigungsmittel
- 72: Befestigungsmittel
- 73: Spanneinrichtung
- 74: Strang
- 75: Strang

- 76: Übertragungsebene
- 77: Winkel
- 78: Führungsebene
- 79: Führungsanordnung
- 80: Führungsanordnung

- 81: Unterseite
- 82: Kettenstrang
- 83: Zahnleiste
- 84: Endbereich
- 85: Endbereich

- 86: Sicherungsvorrichtung
- 87: Schwenkachse
- 88: Schwenkachse
- 89: Einfachhebelelement
- 90: Sperrklinke

- 91: Doppelhebelelement
- 92: Federanordnung
- 93: Anschlagmittel
- 94: Betätigungsbereich
- 95: Anschlagbolzen

- 96: Kulissenausbildung
- 97: Sperrfortsatz
- 98: Hakenhöhe
- 99: Pfeil
- 100: Höhendistanz

- 101: Auflagerfläche
- 102: Schenkel
- 103: Positionierfahne
- 104: Höhe
- 105: Höhenabstand

- 106: Positionserfassungseinrichtung
- 107: Lichtsensor
- 108: Oberfläche
- 109: Abstand
- 110: Steuereinrichtung

- 111: Rechner
- 112: Zentralrechner
- 113: Steuer- und Regeleinrichtung
- 114: Lichtstrahl
- 115: Einschnitt

## Patentansprüche

1. Lastaufnahmemittel (11) für eine Transportvorrichtung, insbesondere für ein Regalbediengerät (1) mit einem in zu einer Aufstandsfläche (6) parallelen Ebene verstellbaren Teleskoptisch (15) zur Aufnahme von zumindest einem Ladehilfsmittel (4), z.B. Behälter, Kiste, etc., mit einem Untertisch (16) und mit dazu und zueinander in linearen in zu einer Mittelebene (46) bevorzugt symmetrisch angeordneten Führungsanordnungen (42, 43, 44, 45) relativ verstellbaren Zwischentisch (17) und Obertisch (18) und mit einer Antriebsvorrichtung (66) zwischen dem Untertisch (16) und Zwischentisch (17) und einer Übertragungsvorrichtung (68) zur Verstellung des Obertisches (18) in Abhängigkeit der Relativbewegung zwischen dem Untertisch (16) und dem Zwischentisch (17), und mit den Führungsanordnungen (42, 43, 44, 45) zwischen dem Zwischentisch (17) und dem Untertisch (16) und dem Zwischentisch (17) und dem Obertisch (18) die in zueinander beabstandeten, parallel zu einer Aufnahmefläche (26) des Obertisches (18) verlaufenden Führungsebenen (47, 48) angeordnet sind und mit zumindest einer weiteren Führungsanordnung (79, 80) die eine dazu senkrecht und parallel zu einer Verstellrichtung des Obertisches (18) ausgerichtete Führungsebene (78) ausbildet und die Übertragungsvorrichtung (68) mit Übertragungsmittel (70) in einer zu einer Oberseite (62) des Obertisches (18) in einem Winkel (77) und parallel zur Verstellrichtung verlaufenden Übertragungsebene (76) angeordnet ist, **dadurch gekennzeichnet, dass** über eine gesamte Länge (30) des Zwischentisches (17) erstreckend die Führungsebenen (47, 48) ausbildende leistenförmige Führungsfortsätze (53) einen Obergurt mit den Führungsanordnungen (42, 43) zwischen dem Zwischentisch (17) und dem Obertisch (18) und einen Untergurt mit den Führungsanordnungen (44, 45) zwischen dem Zwischentisch (17) und dem Untertisch (16) ausbilden.

2. Lastaufnahmemittel nach Anspruch 1, **dadurch gekennzeichnet, dass** der Untertisch (16) und/oder der Zwischentisch (17) und/oder der Obertisch (18) vorzugsweise aus faserund/oder gewebearmierten Kunststoff gebildet sind.

3. Lastaufnahmemittel nach Anspruch 1 oder 2, **dadurch gekennzeichnet, dass** der Untertisch (16) und/oder Zwischentisch (17) und/oder Obertisch (18) aus Leichtmetalllegierungen, insbesondere aus einer Magnesiumlegierung gebildet sind.

4. Lastaufnahmemittel nach einem der vorhergehenden Ansprüche, **dadurch gekennzeichnet, dass** der Zwischentisch (17) und/oder der Obertisch (18) ein kohlefaserverstärkter Verbundbauteil ist.

5. Lastaufnahmemittel nach einem der vorhergehenden Ansprüche, **dadurch gekennzeichnet, dass** der Zwischentisch (17) und/oder der Obertisch (18) ein keflarfaserverstärkter Verbundbauteil ist.

6. Lastaufnahmemittel nach einem der vorhergehenden Ansprüche, **dadurch gekennzeichnet, dass** der Verbundstoff des Zwischentisches (17) und/oder des Obertisches (18) aus Kunststoff, insbesondere aus Polyesterharze gebildet ist.

7. Lastaufnahmemittel nach einem der vorhergehenden Ansprüche, **dadurch gekennzeichnet, dass** im Verbundstoff für den Zwischentisch (17) und/oder den Obertisch (18) Armierungselemente aus Leichtmetall, Stahl, etc., angeordnet sind.

8. Lastaufnahmemittel nach einem der vorhergehenden Ansprüche, dass die Führungsanordnungen (42, 43, 44, 45, 79, 80) durch Rollenführungen gebildet sind.

9. Lastaufnahmemittel nach einem der vorhergehenden Ansprüche, dass die Führungsanordnungen (42, 43, 44, 45, 79, 80) durch Gleitlagerführungen gebildet sind.

10. Lastaufnahmemittel nach einem der vorhergehenden Ansprüche, dass die Führungsanordnungen (42, 43, 44, 45, 79, 80) ausbildend zwischen Aufnahmen (54) und leistenförmigen Führungsfortsätzen (53) reibungsmindemde und verschleißfeste Führungselemente (55) angeordnet sind.

11. Lastaufnahmemittel nach einem der vorhergehenden Ansprüche, dass das Führungselement (55) durch vorzugsweise einem U- Gleitprofil (56) insbesondere aus gleitfreudigen Kunststoff gebildet ist.

12. Lastaufnahmemittel nach einem der vorhergehenden Ansprüche, dass auf einer Außenoberfläche der Führungselemente (55) eine reibungsmindernde, verschleißfeste Schicht (58) insbesondere aus gleitfreudigen Kunststoff angeordnet ist.

13. Lastaufnahmemittel nach einem der vorhergehenden Ansprüche, dass die U- Gleitprofile (56) auf die Führungsfortsätze (53) über form- und/oder reibschlüssige Klemmwirkung befestigt sind.

14. Lastaufnahmemittel nach einem der vorhergehenden Ansprüche, **dadurch gekennzeichnet, dass** die Führungselemente (55) auf den in Längsrichtung verlaufenden am Zwischentische (17) und/oder Obertisch (18) und/oder Untertisch (16), über eine gesamte Länge (30) erstreckenden Führungsfortsätze (53) angeordnet sind und diesen nutförmige Aufnahmen (54) am Untertisch (16) und/oder Zwischentisch (17) und/oder am Obertisch (18) zugeordnet sind.

15. Lastaufnahmemittel nach einem der vorhergehenden Ansprüche, **dadurch gekennzeichnet, dass** die die parallelen Führungsebenen (47, 48) ausbildenden Führungsfortsätze (53) am Mitteltisch bevorzugt symmetrisch zu einer Mittelebene (46) ausgebildet sind.

16. Lastaufnahmemittel nach einem der vorhergehenden Ansprüche, **dadurch gekennzeichnet, dass** eine Gurtbreite (64) des Obergurtes größer ist als eine Gurtbreite (65) des Untergurtes.

17. Lastaufnahmemittel nach einem der vorhergehenden Ansprüche, **dadurch gekennzeichnet, dass** eine Gurtbreite (64) des Obergurtes kleiner ist als eine Gurtbreite (65) des Untergurtes.

18. Lastaufnahmemittel nach einem der vorhergehenden Ansprüche, **dadurch gekennzeichnet, dass** in der Oberseite und der Unterseite des Zwischentisches (17) in Richtung der Längserstreckung verlaufend die nutförmigen Aufnahmen (54) zur Ausbildung der Führungsanordnungen (79, 80) für die Seitenführung in der weiteren Führungsebene (78) angeordnet sind die vorzugsweise senkrecht zu den Führungsebenen (47, 48) und parallel zur Verstellrichtung verläuft.

19. Lastaufnahmemittel nach einem der vorhergehenden Ansprüche, **dadurch gekennzeichnet, dass** den nutförmigen Aufnahmen(54) zugeordnet am Obertisch (18) und Untertisch (16) die leistenförmigen Führungsfortsätze (53) angeordnet sind.

20. Lastaufnahmemittel nach einem der vorhergehenden Ansprüche, dass die leistenförmigen Führungsfortsätze (53) mit den Führungselementen (55) versehen sind.

21. Lastaufnahmemittel nach einem der vorhergehenden Ansprüche, **dadurch gekennzeichnet, dass** in den nutförmigen Aufnahmen (54) die Führungselemente (55) umfassend U-förmige Gegenprofile (57) form- oder reibschlüssig angeordnet sind die vorzugsweise aus beschichteten Metall oder gleitfreudigen Kunststoff oder beschichteten Kunststoff bestehen.

22. Lastaufnahmemittel nach einem der vorhergehenden Ansprüche, **dadurch gekennzeichnet, dass** ein Winkel (77) zwischen der Übertragungsebene (76) und der Oberseite (62) des Obertisches (18) zwischen 10 ° und 60 ° beträgt.

23. Lastaufnahmemittel nach einem der vorhergehenden Ansprüche, **dadurch gekennzeichnet, dass** an entgegengesetzten Endbereichen (84, 85) des Obertisches (18), bevorzugt an Seitenwänden (59) Sicherungsvorrichtungen (86) angeordnet sind mit relativ zur Oberseite (62) des Obertisches (18) zwischen einer mit dieser etwa fluchtenden, in eine diese überragende Stellung verstellbaren Sicherungsmitteln.

24. Lastaufnahmemittel nach einem der vorhergehenden Ansprüche, dass das Sicherungsmittel durch ein an der Seitenwand (59) des Obertisches (18) um eine Schwenkachse (88) schwenkbar gelagertes Doppelhebelelement (31) mit einem hakenförmigen Sperrfortsatz (97) gebildet ist.

25. Lastaufnahmemittel nach einem der vorhergehenden Ansprüche, dass das Sicherungsmittel in einer Kulissenausbildung (96) mit einem um eine Schwenkachse (87) an der Seitenwand (59) schwenkbar angeordneten Einfachhebelelement (89) in Bewegungsverbindung ist.

26. Lastaufnahmemittel nach einem der vorhergehenden Ansprüche, **dadurch gekennzeichnet, dass** das Einfachhebelelement (89) durch eine Auflastkraft auf einen die Oberseite (62) des Obertisches (18) überragenden Betätigungsbereich (94) verschwenkt wird und dabei das Doppelhebelelement (91) in eine Lage schwenkt in der der Sperrfortsatz (97) die Oberseite (62) des Obertisches (18) überragt.

27. Lastaufnahmemittel nach einem der vorhergehenden Ansprüche, **dadurch gekennzeichnet, dass** das Einfachhebelelement (89) über eine Federanordnung (92) bevorzugt eine Blattfeder in einer Ruheposition, bei der der Betätigungsbereich (94) die Oberseite (62) des Obertisches (18) überragt gegen ein Anschlagmittel (93) positioniert.

28. Lastaufnahmemittel nach einem der vorhergehenden Ansprüche, **dadurch gekennzeichnet, dass** die Sicherungsmittel über eine Antriebsvorrichtung zwischen der Ruheposition und einer Arbeitsposition, bei der diese die Oberseite (62) des Obertisches (18) überragen, verstellbar ausgebildet sind.

29. Lastaufnahmemittel nach einem der vorhergehenden Ansprüche, dass ein Überstand, z.B. eine Hakenhöhe (98) einer das Sicherungsmittel bildenden Sperrklinke (90) vorzugsweise größer oder gleich ist als eine Vertikalabstand (100) zwischen Auflagerflächen (101) der Endlosförderer (31, 32) und der Aufnahmefläche (26) des Obertisches (18).

## Claims

1. Load-bearing means (11) for a transport system, in particular for a shelf-stacking device (1), with a telescopic table (15) displaceable in a plane parallel with a support surface (6) for accommodating at least one storage aid (4), e.g. container, box, etc., with a bottom table (16) and with an intermediate table (17) and top table (18) displaceable relative thereto and relative to one another in linear guide systems (42, 43, 44, 45) disposed preferably symmetrically by reference to a mid-plane (46), and with a drive system (66) between the bottom table (16) and intermediate table (17) and a transmission system (68) for displacing the top table (18) depending on the relative movement between the bottom table (16) and the intermediate table (17), and with the guide systems (42, 43, 44, 45) between the intermediate table (17) and the bottom table (16) and between the intermediate table (17) and the top table (18) disposed in guide planes (47, 48) spaced apart from one another and extending parallel with a bearing surface (26) of the top table (18), and with at least one other guide system (79, 80) which forms a guide plane (78) oriented perpendicular thereto and parallel with a displacement direction of the top table (18), and the transmission system (68) incorporating transmission means (70) is disposed in a transmission plane (76) extending at an angle (77) with respect to a top face (62) of the top table (18) and parallel with the displacement direction, **characterised in that** strip-shaped guide projections (53) forming the guide planes (47, 48) extending across an entire length (30) of the intermediate table (17) form a top belt incorporating the guide systems (42, 43) between the intermediate table (17) and the top table (18) and a bottom belt incorporating the guide systems (44, 45) between the intermediate table (17) and the bottom table (16).

2. Load-bearing means as claimed in claim 1, **characterised in that** the bottom table (16) and/or intermediate table (17) and/or top table (18) is or are preferably made from fibre and/or fabric reinforced plastic.

3. Load-bearing means as claimed in claim 1 or 2, **characterised in that** the bottom table (16) and/or intermediate table (17) and/or top table (18) is or are made from light metal alloys, in particular from a magnesium alloy.

4. Load-bearing means as claimed in one of the preceding claims, **characterised in that** the intermediate table (17) and/or top table (18) is a carbon fibre reinforced composite component.

5. Load-bearing means as claimed in one of the preceding claims, **characterised in that** the intermediate table (17) and/or top table (18) is a Kevlar fibre reinforced composite component.

6. Load-bearing means as claimed in one of the preceding claims, **characterised in that** the composite material of the intermediate table (17) and/or top table (18) is made from plastic, in particular from polyester resins.

7. Load-bearing means as claimed in one of the preceding claims, **characterised in that** reinforcing elements of lightweight metal, steel, etc., are provided in the composite material for the intermediate table (17) and/or top table (18).

8. Load-bearing means as claimed in one of the preceding claims, **characterised in that** the guide systems (42, 43, 44, 45, 79, 80) are provided in the form of roller guides.

9. Load-bearing means as claimed in one of the preceding claims, **characterised in that** the guide systems (42, 43, 44, 45, 79, 80) are provided in the form of anti-friction bearing guides.

10. Load-bearing means as claimed in one of the preceding claims, **characterised in that** the guide systems (42, 43, 44, 45, 79, 80) are provided with friction-reducing and wear-resistant guide elements (55) forming strip-shaped guide projections (53) between recesses (54).

11. Load-bearing means as claimed in one of the preceding claims, **characterised in that** the guide element (55) is provided in the form of a U-shaped anti-friction section (56), in particular made from a plastic with good anti-friction properties.

12. Load-bearing means as claimed in one of the preceding claims, **characterised in that** a friction-reducing, wear-resistant coating (58), in particular made from plastic with good anti-friction properties, is provided on an external surface of the guide elements (55).

13. Load-bearing means as claimed in one of the preceding claims, **characterised in that** U-shaped anti-friction sections (56) are secured to the guide projections (53) by a positive and/or frictional clamping action.

14. Load-bearing means as claimed in one of the preceding claims, **characterised in that** the guide elements (55) on the guide projections (53) are disposed in the longitudinal direction extending on the intermediate table (17) and/or top table (18) and/or bottom table (16) running across an entire length (30) and co-operate with the groove-shaped recesses (54) on the bottom table (16) and/or intermediate table (17) and/or on the top table (18).

15. Load-bearing means as claimed in one of the preceding claims, **characterised in that** the guide projections (53) forming the parallel guide planes (47, 48) are disposed on the middle table, preferably symmetrically by reference to a mid-plane (46).

16. Load-bearing means as claimed in one of the preceding claims, **characterised in that** a belt width (64) of the top belt is bigger than a belt width (65) of the bottom belt.

17. Load-bearing means as claimed in one of the preceding claims, **characterised in that** a belt width (64) of the top belt is shorter than a belt width (65) of the bottom belt.

18. Load-bearing means as claimed in one of the preceding claims, **characterised in that** groove-shaped recesses (54) are provided in the top face and the bottom face of the intermediate table (17) extending in the direction of longitudinal extension to form the guide systems (79, 80) providing lateral guidance in the other guide plane (78), which preferably extends perpendicular to the guide planes (47, 48) and parallel with the displacement direction.

19. Load-bearing means as claimed in one of the preceding claims, **characterised in that** the groove-shaped recesses(54) co-operate with the strip-shaped guide projections (53) disposed on the top table (18) and bottom table (16).

20. Load-bearing means as claimed in one of the preceding claims, **characterised in that** the strip-shaped guide projections (53) are provided with the guide elements (55).

21. Load-bearing means as claimed in one of the preceding claims, **characterised in that** U-shaped complementary sections (57) are disposed in a positive or frictional connection in the groove-shaped recesses (54) enclosing the guide elements (55), which are preferably made from coated metal or plastic with good anti-friction properties or coated plastic.

22. Load-bearing means as claimed in one of the preceding claims, **characterised in that** an angle (77) between the transmission plane (76) and the top face (62) of the top table (18) is between 10 ° and 60 °.

23. Load-bearing means as claimed in one of the preceding claims, **characterised in that** locking mechanisms (86) are disposed at opposite end regions (84, 85) of the top table (18), preferably on side walls (59), and have locking means which can be displaced relative to the top face (62) of the top table (18) between a position more or less flush with it and a position projecting beyond it.

24. Load-bearing means as claimed in one of the preceding claims, **characterised in that** the locking means is provided in the form of a double lever element (31) with a hook-shaped lock projection (97) on the side wall (59) of the top table (18) mounted so as to be pivotable about a pivot axis (88).

25. Load-bearing means as claimed in one of the preceding claims, **characterised in that** the locking means is displaceably connected to a single lever element (89) in a slide block system (96) on the side wall (59) which is pivotable about a pivot axis (87).

26. Load-bearing means as claimed in one of the preceding claims, **characterised in that** the single lever element (89) is pivoted on an operating region (94) projecting above the top face (62) of the top table (18) by means of a load force, which causes the double lever element (91) to pivot into a position in which the lock projection (97) projects above the top face (62) of the top table (18).

27. Load-bearing means as claimed in one of the preceding claims, **characterised in that** the single lever element (89) is positioned in a non-operating position by means of a spring system (92), preferably a leaf spring, in which the operating region (94) projects above the top face (62) of the top table (18) positioned against a stop means (93).

28. Load-bearing means as claimed in one of the preceding claims, **characterised in that** the locking means is designed to be displaceable between the non-operating position and an operating position in which it projects above the top face (62) of the top table (18).

29. Load-bearing means as claimed in one of the preceding claims, **characterised in that** a projection distance, e. g. a hook height (98), of a catch pawl (90) forming the locking means is preferably bigger than or the same as a vertical distance (100) between support surfaces (101) of the endless conveyors (31, 32) and the bearing surface (26) of the top table (18).

## Revendications

1. Moyen de réception de charge (11) pour un dispositif de transport, en particulier pour un appareil de manoeuvre d'étagères (1) avec une table télescopique (15) déplaçable dans un plan parallèle à une face d'appui (6) pour la réception d'au moins un moyen auxiliaire de chargement (4), par exemple contenants, caisses, etc., avec une table inférieure (16) et avec une table intermédiaire (17) et une table supérieure (18) déplaçables relativement à celle-ci et l'une relativement à l'autre dans des agencements de guidage linéaires (42, 43, 44, 45) disposés de préférence d'une manière symétrique à un plan médian, et avec un dispositif d'entraînement (66) entre la table inférieure (16) et la table intermédiaire (17) et un dispositif de transfert (68) pour le déplacement de la table supérieure (18) en fonction du mouvement relatif entre la table inférieure (16) et la table intermédiaire (17), et avec les agencements de guidage (42, 43, 44, 45) entre la table intermédiaire (17) et la table inférieure (16) et la table intermédiaire (17) et la table supérieure (18), qui sont disposés dans des plans de guidage (47, 48) espacés l'un de l'autre, s'étendant parallèlement à une face de réception (26) de la table supérieure (18), et avec au moins un autre agencement de guidage (79, 80) qui forme un plan de guidage (78) orienté perpendiculairement à celui-ci et parallèlement à une direction de déplacement de la table supérieure (18), et le dispositif de transfert (68) avec des moyens de transfert (70) est disposé dans un plan de transfert (76) s'étendant relativement à un côté supérieur (62) de la table supérieure (18) selon un angle (77) et parallèlement à la direction de déplacement, **caractérisé en ce que**, en s'étendant sur une longueur totale (30) de la table intermédiaire (17), des prolongements de guidage (53) en forme de baguette formant les plans de guidage (47, 48) forment un brin supérieur avec les agencements de guidage (42, 43) entre la table intermédiaire (17) et la table supérieure (18) et un brin inférieur avec les agencements de guidage (44, 45) entre la table intermédiaire (17) et la table inférieure (16).

2. Moyen de réception de charge selon la revendication 1, **caractérisé en ce que** la table inférieure (16) et/ou la table intermédiaire (17) et/ou la table supérieure (18) sont réalisées de préférence en matériau synthétique armé de fibres et/ou tissus.

3. Moyen de réception de charge selon la revendication 1 ou 2, **caractérisé en ce que** la table inférieure (16) et/ou la table intermédiaire (17) et/ou la table supérieure (18) sont réalisées en des alliages de métaux légers, en particulier en un alliage de magnésium.

4. Moyen de réception de charge selon l'une des revendications précédentes, **caractérisé en ce que** la table intermédiaire (17) et/ou la table supérieure (18) est un composant composite renforcé par des fibres de carbone.

5. Moyen de réception de charge selon l'une des revendications précédentes, **caractérisé en ce que** la table intermédiaire (17) et/ou la table supérieure (18) est un composant composite renforcé par des fibres de Kevlar.

6. Moyen de réception de charge selon l'une des revendications précédentes, **caractérisé en ce que** le composite de la table intermédiaire (17) et/ou de la table supérieure (18) est réalisé en matériau synthétique, en particulier en résines de polyester.

7. Moyen de réception de charge selon l'une des revendications précédentes, **caractérisé en ce que** sont disposés dans le composite pour la table intermédiaire (17) et/ou la table supérieure (18) des éléments d'armature en métal léger, acier, etc.

8. Moyen de réception de charge selon l'une des revendications précédentes, **caractérisé en ce que l**es agencements de guidage (42, 43, 44, 45, 79, 80) sont formés par des guidages à rouleaux.

9. Moyen de réception de charge selon l'une des revendications précédentes, **caractérisé en ce que** les agencements de guidage (42, 43, 44, 45, 79, 80) sont formés par des guidages à palier de glissement.

10. Moyen de réception de charge selon l'une des revendications précédentes, **caractérisé en ce que** des éléments de guidage (55) réduisant le frottement et résistant à l'usure, formant les agencements de guidage (42, 43, 44, 45, 79, 80), sont disposés entre des logements (54) et des prolongements de guidage (53) en forme de baguette.

11. Moyen de réception de charge selon l'une des revendications précédentes, **caractérisé en ce que** l'élément de guidage (55) est formé de préférence par un profilé de glissement en U (56), en particulier en un matériau synthétique glissant.

12. Moyen de réception de charge selon l'une des revendications précédentes, **caractérisé en ce qu'**est disposée sur une surface extérieure des éléments de guidage (55) une couche (58) réduisant le frottement, résistant à l'usure, en particulier en matériau synthétique glissant.

13. Moyen de réception de charge selon l'une des revendications précédentes, **caractérisé en ce que** les profilés de glissement en U (56) sont fixés sur les prolongements de guidage (53) par un effet de serrage par concordance des formes et/ou de frottement.

14. Moyen de réception de charge selon l'une des revendications précédentes, **caractérisé en ce que** les éléments de guidage (55) sont disposés sur les prolongements de guidage (53) s'étendant dans la direction longitudinale à la table intermédiaire (17) et/ou la table supérieure (18) et/ou la table inférieure (16), s'étendant sur toute une longueur (30), et que sont associés à ceux-ci des logements en forme de rainure (54) à la table inférieure (16) et/ou la table intermédiaire (17) et/ou la table supérieure (18).

15. Moyen de réception de charge selon l'une des revendications précédentes, **caractérisé en ce que** les prolongements de guidage (53) formant les plans de guidage parallèles (47, 48) sont réalisés à la table médiane, de préférence d'une manière symétrique à un plan médian (46).

16. Moyen de réception de charge selon l'une des revendications précédentes, **caractérisé en ce qu'**une largeur de brin (64) du brin supérieur est plus grande qu'une largeur de brin (65) du brin inférieur.

17. Moyen de réception de charge selon l'une des revendications précédentes, **caractérisé en ce qu'**une largeur de brin (64) du brin supérieur est plus petite qu'une largeur de brin (65) du brin inférieur.

18. Moyen de réception de charge selon l'une des revendications précédentes, **caractérisé en ce que** sont disposés dans le côté supérieur et le côté inférieur de la table intermédiaire (17), en s'étendant dans la direction de l'extension logitudinale, les logements en forme de rainure (54) pour la formation des agencements de guidage (79, 80) pour le guidage latéral dans l'autre plan de guidage (78), qui s'étend de préférence perpendiculairement aux plans de guidage (47, 48) et parallèlement à la direction de déplacement.

19. Moyen de réception de charge selon l'une des revendications précédentes, **caractérisé en ce que** les prolongements de guidage (53) en forme de baguette, associés aux logements en forme de rainure (54), sont disposés à la table supérieure (18) et la table inférieure (16).

20. Moyen de réception de charge selon l'une des revendications précédentes, **caractérisé en ce que** les prolongements de guidage en forme de baguette (53) sont pourvus des éléments de guidage (55).

21. Moyen de réception de charge selon l'une des revendications précédentes, **caractérisé en ce que,** dans les logements en forme de rainure (54), entourant les éléments de guidage (55), sont disposés des contre-profilés en forme de U (57) par concordance des formes ou de frottement, qui sont réalisés de préférence en métal recouvert ou matériau synthétique glissant ou matériau synthétique revêtu.

22. Moyen de réception de charge selon l'une des revendications précédentes, **caractérisé en ce qu'**un angle (77) entre le plan de transfert (76) et le côté supérieur (62) de la table supérieure (18) est entre 10° et 60°.

23. Moyen de réception de charge selon l'une des revendications précédentes, **caractérisé en ce que** sont disposés à des zones d'extrémité opposées (84, 85) de la table supérieure (18), de préférence à des parois latérales (59), des dispositifs de sécurité (86) avec des moyens de sécurité déplaçables relativement au côté supérieur (62) de la table supérieure (18), entre une position sensiblement alignée avec celle-ci, en une position faisant saillie sur celle-ci.

24. Moyen de réception de charge selon l'une des revendications précédentes, **caractérisé en ce que** le moyen de sécurité est formé par un élément à levier double (31) avec un prolongement d'arrêt en forme de crochet (97), logé à la paroi latérale (59) de la table supérieure (18) d'une manière pivotante autour d'un axe de pivotement (88).

25. Moyen de réception de charge selon l'une des revendications précédentes, **caractérisé en ce que** le moyen de sécurité est en liaison de mouvement, dans une formation de coulisse (96), avec un élément à levier unique (89) disposé d'une manière pivotante autour d'un axe de pivotement (87) à la paroi latérale (59).

26. Moyen de réception de charge selon l'une des revendications précédentes, **caractérisé en ce que** l'élément à levier unique (89) est amené à pivoter par une charge d'appui sur une zone d'actionnement (94) faisant saillie sur le côté supérieur (62) de la table supérieure (18) et, ce faisant, fait pivoter l'élément à levier double (91) dans une position dans laquelle le prolongement d'arrêt (97) fait saillie sur le côté supérieur (62) de la table supérieure (18).

27. Moyen de réception de charge selon l'une des revendications précédentes, **caractérisé en ce que** l'élément à levier unique (89) est positionné contre un moyen de butée (93), par un agencement à ressort (92), de préférence un ressort à lames, dans une position de repos dans laquelle la zone d'actionnement (94) fait saillie sur le côté supérieur (62) de la table supérieure (18).

28. Moyen de réception de charge selon l'une des revendications précédentes, **caractérisé en ce que** les moyens de sécurité sont réalisés d'une manière déplaçable par un dispositif d'entraînement entre la position de repos et une position de travail, dans laquelle ceux-ci font saillie sur le côté supérieur (62) de la table supérieure (18).

29. Moyen de réception de charge selon l'une des revendications précédentes, **caractérisé en ce qu'**une projection, par exemple une hauteur de crochet (98) d'un cliquet d'arrêt (90) formant le moyen de sécurité est de préférence plus grande ou égale à un écart vertical (100) entre les faces d'application (101) des convoyeurs sans fin (31, 32) et la face de réception (26) de la table supérieure (18).
